# EUROPEAN PATENT APPLICATION

(11) **EP 3 441 604 A1**
(43) Date of publication of application: **13.02.2019**
(21) Application number: 17779062.3
(22) Date of filing: 31.03.2017
(51) Int. Cl.: F02M 26/49, F02D 45/00, F02M 26/05, F02M 26/47, G01M 15/04

(54) **ABNORMALITY DETECTION DEVICE, ABNORMALITY DETECTION METHOD, AND ABNORMALITY DETECTION SYSTEM**

(30) Priority: 04.04.2016 JP 2016075412
(71) Applicant: Isuzu Motors Limited, Tokyo 140-8722 (JP)
(72) Inventor: KOMENO, Naotoshi, Fujisawa-shi Kanagawa 252-0881 (JP); SHIDOMI, Katsushi, Fujisawa-shi Kanagawa 252-0881 (JP); FUJIKAWA, Yuuji, Fujisawa-shi Kanagawa 252-0881 (JP)
(74) Representative: Miller Sturt Kenyon
(86) International application number: PCT/JP2017/013687
(87) International publication number: WO 2017/175683

(57) **Abstract**

An abnormality detection device (1) includes an intake amount acquisition unit (141), which acquires intake amount data indicating an intake amount when an EGR valve (52) is being in a certain state, the intake amount being measured at a plurality of different times, a storage unit (13), which stores a plurality of the intake amount data acquired by the intake amount acquisition unit (141), in association with a time at which the intake amount is measured, and an abnormality detection unit (142), which detects an abnormality of the EGR valve (52) based on a changing tendency of a plurality of the intake amounts measured during a certain period.

## Description

### TECHNICAL FIELD

The present disclosure relates to an abnormality detection device, an abnormality detection method, and an abnormality detection system, which detect abnormality of an intake and exhaust system.

### BACKGROUND ART

Generally, an exhaust gas recirculation (hereinafter, referred to as EGR) device that reduces nitrogen oxide (NOx) in an exhaust gas by re-circulating a part of the exhaust gas from an engine of a vehicle to a combustion chamber is known. In the EGR device, a recirculation amount of the exhaust gas is adjusted by controlling an opening degree of an exhaust gas recirculation valve (hereinafter, referred to as an EGR valve) that adjusts an intake amount (for example, refer to Patent Literature 1).

### Citation List

### [Patent Literature]

[Patent Literature 1]: JP-A-2015-14275

### SUMMARY

### Technical Problem

In related art, an abnormality of an EGR valve is determined based on whether a change of intake pressure caused by a change of opening and closing of the EGR valve matches a predicted value of the change of the intake pressure. However, since the intake pressure may be changed due to various factors, an error often occurs in a determination result when existence of an abnormality is determined based on one change of the intake pressure.

In this regard, the present disclosure provides an abnormality detection device, an abnormality detection method, and an abnormality detection system capable of improving precision of detecting an abnormality of an intake and exhaust system.

### Solution to Problem

According to a first aspect of the present disclosure, there is provided an abnormality detection device that detects an abnormality of an exhaust gas recirculation valve mounted on a vehicle, the abnormality detection device including: an intake amount acquisition unit, which acquires intake amount data indicating an intake amount while the exhaust gas recirculation valve is being in a certain state, the intake amount being measured at a plurality of different times; a storage unit, which stores a plurality of the intake amount data acquired by the intake amount acquisition unit, in association with a time at which the intake amount is measured; and an abnormality detection unit, which detects an abnormality of the exhaust gas recirculation valve based on a changing tendency of a plurality of the intake amounts measured during a certain period.

In the abnormality detection device, the storage unit may store a normal range in which the changing tendency is determined to be normal, and the abnormality detection unit may detect the abnormality by comparing the changing tendency within the latest certain period with the normal range when the intake amount acquisition unit acquires new intake amount data.

In the abnormality detection device, the intake amount acquisition unit may acquire the intake amount in association with control content of the exhaust gas recirculation valve, and the abnormality detection unit may detect an abnormality of the exhaust gas recirculation valve based on the changing tendency of the plurality of intake amounts for each control content.

In the abnormality detection device, the abnormality detection unit may detect an abnormality of the exhaust gas recirculation valve based on the intake amount data indicating the intake amount measured while an engine of the vehicle is being in an idle state.

In the abnormality detection device, the intake amount acquisition unit may acquire the intake amount in association with information indicating a state of a surrounding environment of the vehicle, and the abnormality detection unit may detect an abnormality of the exhaust gas recirculation valve based on a corrected intake amount obtained by correcting the intake amount acquired by the intake amount acquisition unit, based on the state of the surrounding environment.

According to a second aspect of the present disclosure, there is provided an abnormality detection method for detecting an abnormality of an exhaust gas recirculation valve mounted on a vehicle, the abnormality detection method including: acquiring intake amount data indicating an intake amount while the exhaust gas recirculation valve is being in a certain state, the intake amount being measured at a plurality of different times; storing a plurality of the acquired intake amount data in association with a time at which the intake amount is measured; and detecting an abnormality of the exhaust gas recirculation valve based on a changing tendency of a plurality of the intake amounts measured during a certain period.

According to a third aspect of the present disclosure, there is provided an abnormality detection system including an exhaust gas recirculation device mounted on a vehicle and an abnormality detection device that detects an abnormality of an exhaust gas recirculation valve based on an intake amount of the exhaust gas recirculation valve measured by the exhaust gas recirculation device, wherein the exhaust gas recirculation device includes: a measurement unit, which measures an intake amount at a plurality of different times while the exhaust gas recirculation valve is being in a certain state; and a communication unit, which transmits intake amount data indicating the intake amount to the abnormality detection device via a wireless communication line, and the abnormality detection device includes: an intake amount acquisition unit, which acquires the intake amount data transmitted by the exhaust gas recirculation device; a storage unit, which stores a plurality of the intake amount data acquired by the intake amount acquisition unit, in association with a time at which the intake amount is measured; and an abnormality detection unit, which detects an abnormality of the exhaust gas recirculation valve based on a changing tendency of a plurality of the intake amounts measured during a certain period.

### Advantageous Effects of the Invention

According to the present disclosure, an effect of improving precision of detecting an abnormality of an intake and exhaust system may be obtained.

### BRIEF DESCRIPTION OF THE DRAWINGS

FIG. 1 is a diagram showing a configuration of an abnormality detection system.
FIG. 2 is a diagram showing a configuration of an intake and exhaust system of a vehicle.
FIG. 3 is a diagram showing a configuration of an abnormality detection device.
FIGS. 4A and 4B are diagrams showing examples of intake amount data used by an abnormality detection unit for analysis.
FIG. 5 is a flowchart of an operation by which an abnormality detection device detects an abnormality of an exhaust gas recirculation valve.

### DESCRIPTION OF EMBODIMENTS

### <First Embodiment>

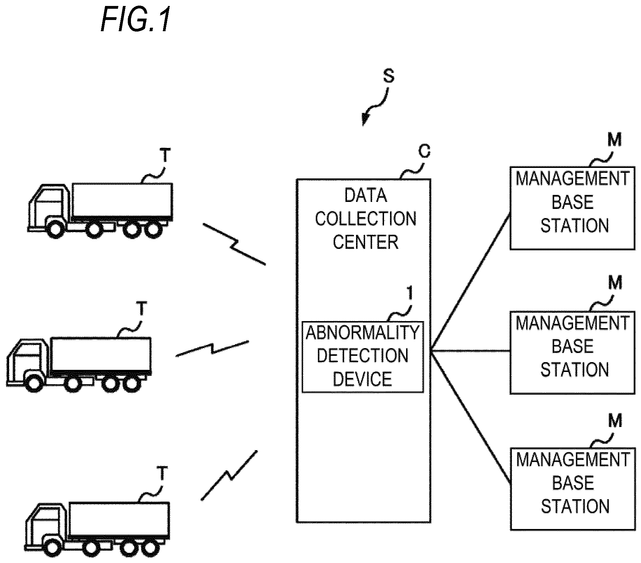

FIG. 1 is a diagram showing a configuration of an abnormality detection system S according to an embodiment. The abnormality detection system S is a system in which an abnormality detection device 1 and a vehicle T operate in association with each other to detect an abnormality of the vehicle T. The abnormality detection device 1 is installed in a data collection center C that collects data indicating states of various vehicles T. The abnormality detection device 1 is connected to a plurality of vehicles T via a wireless communication line to receive the data indicating the states of the vehicles T from the respective vehicles T every certain time interval. The abnormality detection device 1 detects the abnormality of the vehicle T based on various types of data received from the vehicle T.

The abnormality detection device 1 is connected to a computer installed in a management base station M that manages the vehicle T, through a network (for example, the Internet). The management base station M is, for example, a company that owns the vehicle T or a company that maintains the vehicle T. Upon receiving a notification that an abnormality has occurred in the vehicle T from the abnormality detection device 1, an employee of the management base station M may notify a driver of the vehicle T that the abnormality has occurred or maintain the vehicle T, thereby preventing a serious accident in advance.

An intake and exhaust system is mounted on the vehicle T of the present embodiment. The intake and exhaust system includes an exhaust gas recirculation (EGR) device. The EGR device is a device that reduces nitrogen oxide (NOx) in an exhaust gas by re-circulating a part of the exhaust gas of a diesel engine (hereinafter, simply referred to as an engine). The intake and exhaust system measures an intake amount, and transmits intake amount data indicating the measured intake amount to the abnormality detection device 1 every certain time interval.

### [Configuration of Intake and Exhaust System 2]

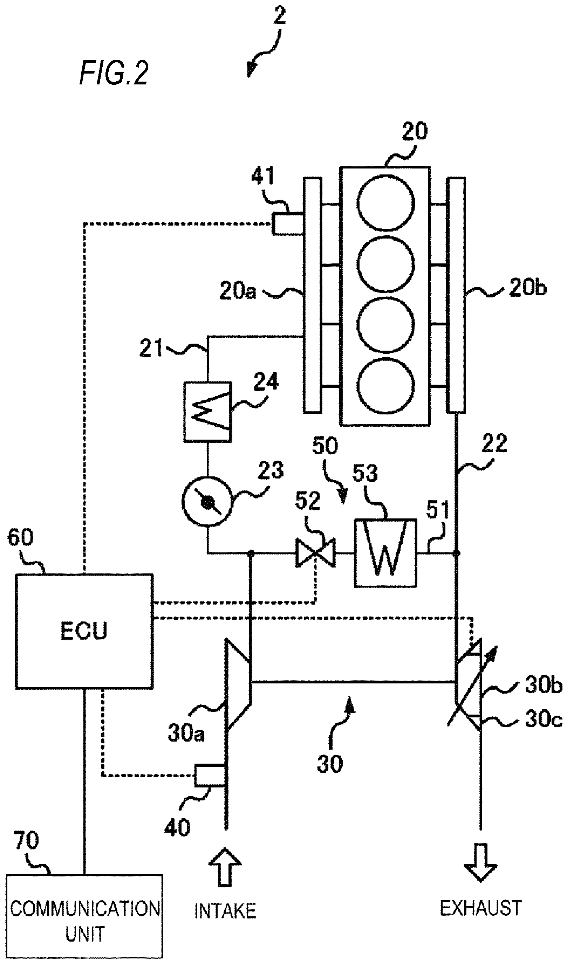

FIG. 2 is a diagram showing a configuration of an intake and exhaust system 2 of the vehicle T. An intake passage 21 is connected to an intake manifold 20a of an engine 20, and an exhaust passage 22 is connected to an exhaust manifold 20b. A compressor 30a of a variable nozzle turbo 30, a throttle valve 23, and an intercooler 24 are provided in the intake passage 21 sequentially from an upstream side, and a turbine 30b of the variable nozzle turbo 30 is provided in the exhaust passage 22.

An intake flow rate sensor 40 is provided at an intake upstream side of the compressor 30a. Also, an intake pressure sensor 41 is provided at the intake manifold 20a. A detected value (hereinafter, referred to as intake amount) of the intake flow rate sensor 40 and a detected value (hereinafter, referred to as intake pressure) of the intake pressure sensor 41 are input to an engine control unit (ECU) 60 electrically connected thereto.

The variable nozzle turbo 30 includes the compressor 30a provided at the intake passage 21, the turbine 30b provided at the exhaust passage 22, and a variable nozzle 30c provided at the turbine 30b. The compressor 30a and the turbine 30b are connected via a rotation shaft.

An EGR device 50 includes an EGR passage 51 for communicating the exhaust passage 22 on an exhaust upstream side from the turbine 30b and the intake passage 21 on the intake upstream side from the intercooler 24, an exhaust gas recirculation valve (EGR valve) 52 for adjusting a flow rate of an EGR gas, and an EGR cooler 53 for cooling the EGR gas. A flow rate of the EGR gas in the EGR device 50 is adjusted when an opening degree of the EGR valve 52 is controlled according to an opening degree control signal output from the ECU 60. Here, since an exhaust amount introduced from the exhaust passage 22 through the EGR passage 51 and the EGR cooler 53 is changed according to a change of the opening degree of the EGR valve 52, an intake amount introduced through the compressor 30a is changed. Accordingly, the opening degree of the EGR valve 52 may be specified based on the intake amount detected by the intake flow rate sensor 40.

The ECU 60 performs various controls, such as fuel injection of the engine 20, control of the opening degree of the EGR valve 52 included in the EGR device 50, and the like. The ECU 60 includes a central processing unit (CPU), a read only memory (ROM), a random access memory (RAM), an input port, an output port, and the like.

Also, the ECU 60 associates intake amount data indicating the intake amount detected by the intake flow rate sensor 40 with a time at which the intake amount is measured and a value of the opening degree control signal at the time when the intake amount is measured, and stores the intake amount data in the RAM. For example, the ECU 60 distinguishes intake amount data measured at timing when the opening degree of the EGR valve 52 is instructed to be 0% and intake amount data measured at timing when the opening degree of the EGR valve 52 is instructed to be 100%, and stores the intake amount data in the RAM.

A communication unit 70 is a wireless communication unit for transmitting and receiving data via a wireless communication line. The communication unit 70 transmits various types of data acquired from the ECU 60 to the abnormality detection device 1, and at the same time, receives various types of data transmitted by the abnormality detection device 1 and notifies the ECU 60. The communication unit 70 transmits, for example, intake amount data indicating an intake amount detected by the intake flow rate sensor 40 during a certain period and temporarily accumulated by the ECU 60 to the abnormality detection device 1 every certain time intervals. Here, the communication unit 70 transmits the intake amount data in association with control content (for example, a value of the opening degree) indicated by opening degree control information at the time when the intake amount is measured.

In a case where the EGR valve 52 is normal, when the opening control information is uniform, the opening degree of the EGR valve 52 has a uniform value, and thus the intake amount is also uniform. However, when an abnormality occurs in the EGR valve 52 due to deterioration or malfunction of the EGR valve 52, even when the opening degree control information is uniform, the opening degree of the EGR valve 52 gradually changes. In this regard, in the intake and exhaust system 2 according to the present embodiment, the communication unit 70 transmits the intake amount data to the abnormality detection device 1 every certain time interval such that the abnormality detection device 1 is able to detect occurrence of an abnormality in the EGR valve 52 based on a changing tendency of the intake amount over a certain period.

### [Configuration of Abnormality Detection Device 1]

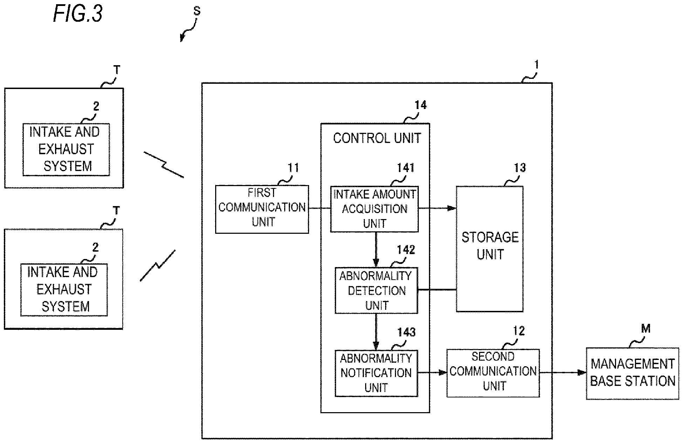

FIG. 3 is a diagram showing a configuration of the abnormality detection device 1.

The abnormality detection device 1 includes a first communication unit 11, a second communication unit 12, a storage unit 13, and a control unit 14. The control unit 14 includes an intake amount acquisition unit 141, an abnormality detection unit 142, and an abnormality notification unit 143.

The first communication unit 11 is a wireless communication unit for transmitting and receiving data to and from the intake and exhaust system 2 via a wireless communication line. For example, the first communication unit 11 receives radio waves including various types of data, such as the intake amount data and the like, from a pre-registered plurality of vehicles T, via a computer of a packet communication network. The first communication unit 11 extracts the intake amount data included in the radio waves, and inputs the intake amount data to the intake amount acquisition unit 141.

The second communication unit 12 is a communication controller for transmitting and receiving data to and from a computer of the management base station M via the Internet. When the abnormality detection unit 142 detects an abnormality of the EGR valve 52 of the vehicle T, the second communication unit 12 transmits a message notifying the abnormality to the computer of the management base station M managing the vehicle T.

The storage unit 13 is a storage medium including ROM, RAM, a hard disk, and the like. The storage unit 13 stores programs executed by the control unit 14. Also, the storage unit 13 stores the intake amount data transmitted from the vehicle T in association with identification information unique to each vehicle T and the time when the intake amount is measured.

Also, the storage unit 13 stores information (hereinafter, referred to as normal range information) indicating a normal range in which a changing tendency of the intake amount data used by the abnormality detection unit 142 to detect an abnormality of the EGR valve 52 is determined to be normal. Since the normal range varies according to a type of the vehicle T, the storage unit 13, for example, stores the normal range information in association with the type of the vehicle T. The storage unit 13 may store the normal range information determined based on a characteristic of the EGR valve 52 measured at a time of shipment of the vehicle T, in association with the identification information of the vehicle T. Also, the storage unit 13 may periodically update the normal range information based on intake amount data acquired from a plurality of same type of vehicles T

The control unit 14 is, for example, a CPU, and functions as the intake amount acquisition unit 141, the abnormality detection unit 142, and abnormality notification unit 143 by executing programs stored in the storage unit 13.

The intake amount acquisition unit 141 acquires the intake amount data indicating the intake amount while the EGR valve 52 is being in a certain state, the intake amount being measured at a plurality of different times, via the first communication unit 11. Since the vehicle T transmits the intake amount data in association with a value of the opening degree control information at the time when the intake amount is measured, the intake amount acquisition unit 141 stores the acquired intake amount data in the storage unit 13 in association with the time when the intake amount is measured and the value of the opening degree control information at the time when the intake amount is measured.

The abnormality detection unit 142 detects an abnormality of the EGR valve 52 based on a changing tendency of a plurality of intake amounts measured during a certain period. For example, when intake amount data is transmitted from the vehicle T, the abnormality detection unit 142 reads a plurality of intake amount data measured over a period longer than a fluctuation period of an intake amount, which may be generated by a fluctuation of the intake amount caused by a change of an external environment of the vehicle T or the like, from the storage unit 13, and analyses the read intake amount data.

The abnormality detection unit 142 specifies the changing tendency of the plurality of intake amounts for each value of the opening degree control information at the time when the intake amount is measured, and determines existence of an abnormality. For example, when the changing tendency of the intake amounts indicates an abnormal state when the opening degree control information indicates that the opening degree of the EGR valve 52 is set to 0% (for example, when an intake amount during a certain period is decreased to 800 mg despite the intake amount should originally be 1000 mg), the abnormality detection unit 142 determines that there is a possibility of a gas leak in a part of an EGR valve system or a failure that the EGR valve 52 is not blocked.

When the changing tendency of the intake amounts indicates an abnormal state when the opening degree control information indicates that the opening degree of the EGR valve 52 is set to 100% (for example, when an intake amount is increased more than 800 mg and reached 1000 mg within a certain period despite the intake amount should originally be 800 mg), the abnormality detection unit 142 determines that there is a possibility of a failure that the EGR valve 52 is not normally opened.

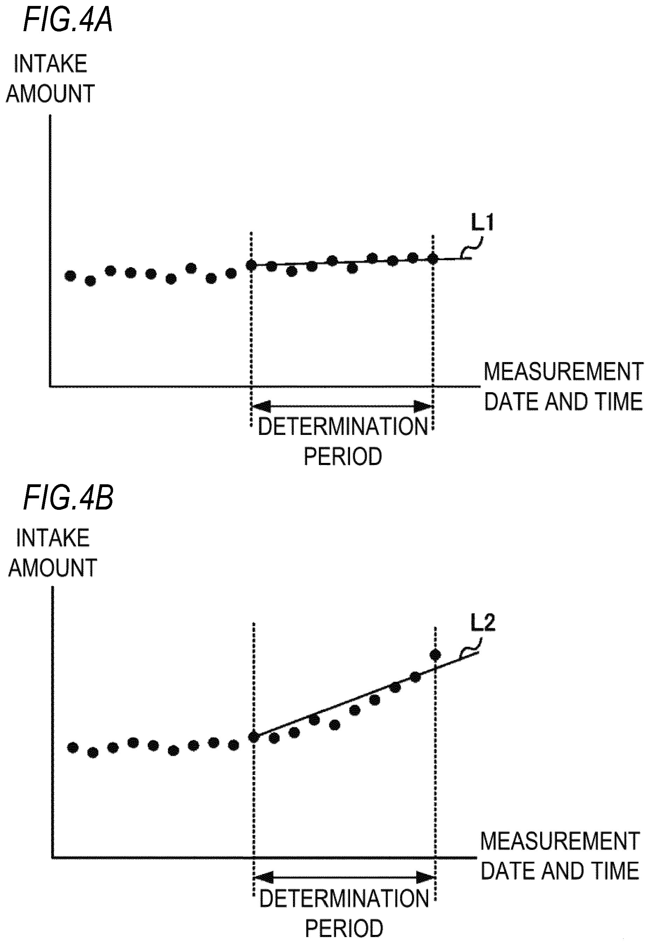

FIGS. 4A and 4B are diagrams showing examples of intake amount data used by the abnormality detection unit 142 for analysis. In FIGS. 4A and 4B, a horizontal axis indicates measurement date and time, and a vertical axis indicates intake amount. FIG. 4A indicates intake amount data when an abnormality did not occur in the EGR valve 52. Upon acquiring latest intake amount data from the intake amount acquisition unit 141, the abnormality detection unit 142 specifies a changing tendency of intake amount data measured within a latest determination period. The abnormality detection unit 142 specifies a changing amount of intake amounts with respect to a changing amount of the measurement date and time, that is, an inclination of a straight line L1 shown in FIG. 4A, as the changing tendency. For example, the abnormality detection unit 142 may determine the straight line L1 by obtaining a regression line of the intake amount data within the determination period.

The abnormality detection unit 142 detects an abnormality by comparing the changing tendency within the latest determination period with a normal range. In detail, the abnormality detection unit 142 determines whether the specified changing tendency is included in the normal range indicated by the normal range information stored in the storage unit 13. For example, when the inclination of the straight line L1 specified as the changing tendency is within a certain range, the abnormality detection unit 142 determines that the EGR valve 52 is normal, and when the inclination of the straight line L1 is outside the normal range, the abnormality detection unit 142 determines that the EGR valve 52 is abnormal.

FIG. 4B indicates intake amount data when an abnormality occurred in the EGR valve 52. In FIG. 4B, an inclination of a straight line L2 specified by the abnormality detection unit 142 based on the intake amount data within the determination period is larger than the inclination of the straight line L1 shown in FIG. 4A. When the inclination of the straight line L2 is not included in the normal range, the abnormality detection unit 142 determines that an abnormality has occurred in the EGR valve 52. When it is determined that the abnormality has occurred, the abnormality detection unit 142 notifies the abnormality notification unit 143 of the occurrence of the abnormality and the identification information of the vehicle T associated with the intake amount data determined to have the abnormality.

The abnormality detection unit 142 may detect an abnormality of the EGR valve 52 based on intake amount data indicating an intake amount measured while an engine of the vehicle T is being in an idle state. While the engine is being in the idle state, a load applied to the engine is constant and a variation of the intake amount is small, and thus the abnormality detection unit 142 may improve precision of detecting an abnormality.

When the abnormality detection unit 142 determines that an abnormality has occurred in the EGR valve 52, the abnormality notification unit 143 notifies the computer of the management base station M that the abnormality has occurred. In detail, the abnormality notification unit 143 notifies the computer of the management base station M that the abnormality has occurred by preparing an abnormality notification message including the identification information of the vehicle T where the abnormality has occurred, an address of the computer of the management base station M managing the vehicle T, and the occurrence of the abnormality, and transmitting the abnormality notification message through the second communication unit 12.

### [Flowchart of Abnormality Detection Operation]

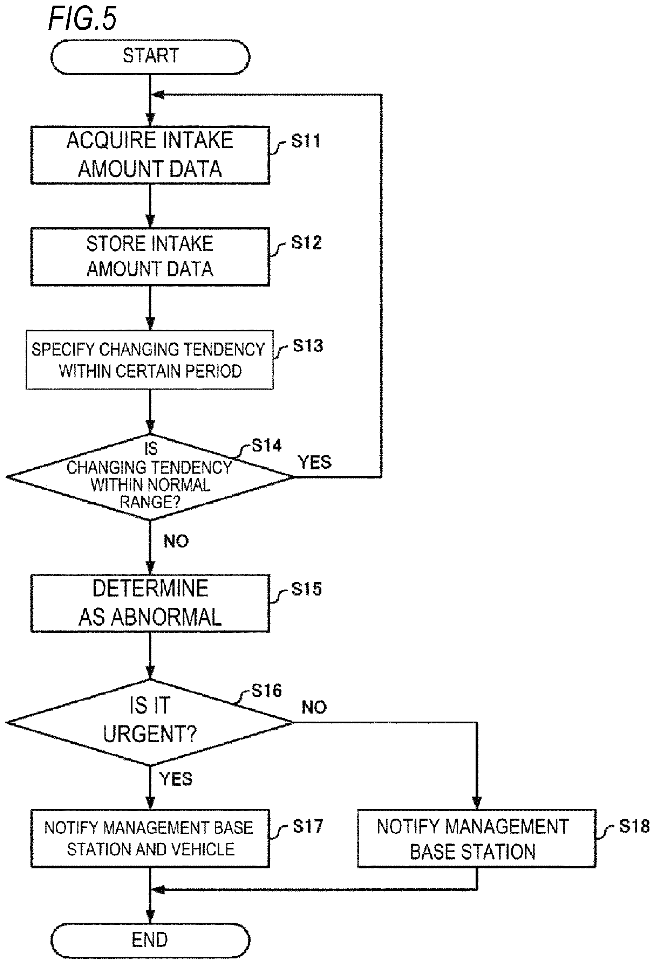

FIG. 5 is a flowchart of an operation by which the abnormality detection device 1 detects an abnormality of the EGR valve 52.

First, the intake amount acquisition unit 141 acquires intake amount data transmitted from the vehicle T (step S11). Whenever the intake amount data is acquired, the intake amount acquisition unit 141 associates the intake amount data with identification information of the vehicle T, and stores the intake amount data in the storage unit 13 (step S12).

When the intake amount acquisition unit 141 acquires new intake amount data, the abnormality detection unit 142 specifies a changing tendency of a plurality of the intake amount data acquired by the intake amount acquisition unit 141 within a latest certain period (step S13). Then, the abnormality detection unit 142 determines whether the specified changing tendency is within a normal range indicated by normal range information stored in the storage unit 13 (step S14).

When the changing tendency is within the normal range (YES in step S14), the abnormality detection unit 142 determines that an abnormality has not occurred, returns process to step S11, and stands by until next intake amount data is transmitted. When the changing tendency is not within the normal range (NO in step S14), the abnormality detection unit 142 determines that an abnormality has occurred in the EGR valve 52 (step S15).

Here, the abnormality detection unit 142 determines whether a level of the abnormality is a level that requires an urgent response or a level that does not require an urgent response, and notifies the abnormality notification unit 143 of a level of urgency together with the occurrence of the abnormality. (step S16). Upon receiving a notification of an occurrence of an urgent abnormality (for example, an abnormality that causes inconvenience in driving), the abnormality notification unit 143 notifies both the management base station M and the vehicle T that the abnormality has occurred (step S17). Upon receiving a notification of an occurrence of an unimportant abnormality (for example, an abnormality in which deterioration of a component is estimated), the abnormality notification unit 143 notifies only the management base station M that the abnormality has occurred (step S18).

### [Modified Example 1]

In the above description, the abnormality detection unit 142 determines an abnormality based on a value of intake amount data acquired by the intake amount acquisition unit 141. However, an intake amount may change due to a state of a surrounding environment of the vehicle T. For example, when the vehicle T is traveling an area with a high altitude, an intake amount tends to increase more than when the vehicle T is traveling an area with a low altitude. Thus, the intake amount acquisition unit 141 may acquire information indicating the state of the surrounding environment, such as an altitude, atmospheric pressure, or the like of a place where the vehicle T was traveling when the intake amount was measured, in association with the intake amount data, and the abnormality detection unit 142 may determine existence of an abnormality based on a changing tendency of the intake amount after correction based on the information indicating the state of the surrounding environment.

### [Modified Example 2]

In the above description, the abnormality detection unit 142 determines existence of an abnormality by using a changing amount of an intake amount within a certain period as a changing tendency of the intake amount, but other information may be used as information indicating the changing tendency. For example, the abnormality detection unit 142 may specify a changing tendency of intake amount data by using a statistical value, such as a size of distribution of a plurality of intake amounts measured within a certain period, or the like.

### [Modified Example 3]

In the above description, an example in which the abnormality detection unit 142 determines existence of an abnormality of the EGR valve 52 based on an intake amount measured while the engine is being in an idle state has been described, but the abnormality detection unit 142 may determine existence of an abnormality based on an intake amount measured while the engine is being in a plurality of states other than the idle state. Since the abnormality detection unit 142 is able to suppress an effect of variation by using a value obtained by averaging a plurality of intake amounts measured in the plurality of states, precision of detecting occurrence of an abnormality may be improved.

### [Effect of Abnormality Detection Device 1 of Present Embodiment]

As described above, the abnormality detection device 1 receives intake amount data measured at a plurality of different times from the vehicle T, and stores a plurality of intake amount data, which are continuously received, in association with a time at which an intake amount is measured. Then, the abnormality detection device 1 detects an abnormality of an exhaust gas recirculation valve based on a changing tendency of a plurality of intake amounts measured during a certain period. Accordingly, a possibility of erroneously detecting an abnormality due to a temporary change of an intake amount is decreased, and thus precision of detecting an abnormality may be improved.

In addition, the abnormality detection device 1 acquires an intake amount in association with control content of the EGR valve 52 with respect to the vehicle T, and detects an abnormality of the EGR valve 52 based on a changing tendency of a plurality of intake amounts for every control content. Accordingly, the abnormality detection device 1 is able to detect an abnormality based on a changing tendency of intake amounts measured while the EGR valve 52 is controlled under a same condition, and thus precision of detecting an abnormality may be improved.

Also, the abnormality detection device 1 detects an abnormality of the EGR valve 52 based on an intake amount measured while the engine of the vehicle T is being in an idle state. Accordingly, the abnormality detection device 1 is able to detect an abnormality based on data measured while the intake amount is stable, and thus precision of detecting an abnormality may be improved.

Further, the abnormality detection device 1 acquires an intake amount in association with information indicating a state of a surrounding environment of the vehicle T, and detects an abnormality of the EGR valve 52 based on a corrected intake amount obtained by correcting the intake amount based on the state of the surrounding environment. Accordingly, it is possible to detect an abnormality without being affected by a change of the intake amount caused by an effect of the surrounding environment, such as the vehicle T traveling an area with a high altitude, or the like, and thus precision of detecting an abnormality is improved.

### <Second Embodiment>

In the first embodiment, an abnormality of the EGR valve 52 is detected in the abnormality detection device 1 installed in the data collection center C, but the vehicle T may include an abnormality detection device equivalent to the abnormality detection device 1 of the first embodiment such that the vehicle T may detect an abnormality of the EGR valve 52. In this case, when the abnormality detection device of the vehicle T detects an abnormality, the abnormality detection device of the vehicle T displays occurrence of the abnormality on an instrument panel and notifies a driver, or notifies the management base station of the occurrence of the abnormality.

Although the present disclosure has been described using embodiments, the technical scope of the present disclosure is not limited to the scope described in the above embodiments. It is obvious to one skilled in the art that various modifications or improvements can be added to the above embodiments. It is obvious from the description of the scope of claims that a mode with such modifications or improvements can also be included in the technical scope of the present disclosure.

The present application is based on Japanese Patent Application (Japanese Patent Application No. 2016-075412) filed on April 4, 2016, the contents of which are incorporated herein by reference.

### Industrial Applicability

According to the abnormality detection device, the abnormality detection method, and the abnormality detection system of the present disclosure, precision of detecting an abnormality of an intake and exhaust system may be improved.

### Reference Signs List

- 1: Abnormality Detection Device
- 2: Intake and Exhaust System
- 11: First Communication Unit
- 12: Second Communication Unit
- 13: Storage Unit
- 14: Control unit
- 20: Engine
- 20a: Intake Manifold
- 20b: Exhaust Manifold
- 21: Intake Passage
- 22: Exhaust Passage
- 23: Throttle Valve
- 24: Intercooler
- 30: Variable Nozzle Turbo
- 30a: Compressor
- 30b: Turbine
- 30c: Variable Nozzle
- 40: Intake Flow Rate Sensor
- 41: Intake Pressure Sensor
- 50: EGR Device
- 51: EGR Passage
- 52: EGR Valve
- 53: EGR Cooler
- 60: ECU
- 70: Communication Unit
- 141: Intake Amount Acquisition Unit
- 142: Abnormality Detection Unit
- 143: Abnormality Notification Unit

## Claims

1. An abnormality detection device that detects an abnormality of an exhaust gas recirculation valve mounted on a vehicle, the device comprising:
an intake amount acquisition unit, which acquires intake amount data indicating an intake amount while the exhaust gas recirculation valve is being in a certain state, the intake amount being measured at a plurality of different times;
a storage unit, which stores a plurality of the intake amount data acquired by the intake amount acquisition unit, in association with a time at which the intake amount is measured; and
an abnormality detection unit, which detects an abnormality of the exhaust gas recirculation valve based on a changing tendency of a plurality of the intake amounts measured during a certain period.

2. The abnormality detection device according to claim 1, wherein
the storage unit stores a normal range in which the changing tendency is determined to be normal, and
the abnormality detection unit detects the abnormality by comparing the changing tendency within the latest certain period with the normal range when the intake amount acquisition unit acquires new intake amount data.

3. The abnormality detection device according to claim 1 or 2, wherein
the intake amount acquisition unit acquires the intake amount in association with control content of the exhaust gas recirculation valve, and
the abnormality detection unit detects an abnormality of the exhaust gas recirculation valve based on the changing tendency of the plurality of intake amounts for each control content.

4. The abnormality detection device according to any one of claims 1 to 3, wherein
the abnormality detection unit detects an abnormality of the exhaust gas recirculation valve based on the intake amount data indicating the intake amount measured while an engine of the vehicle is being in an idle state.

5. The abnormality detection device according to any one of claims 1 to 4, wherein
the intake amount acquisition unit acquires the intake amount in association with information indicating a state of a surrounding environment of the vehicle, and
the abnormality detection unit detects an abnormality of the exhaust gas recirculation valve based on a corrected intake amount obtained by correcting the intake amount acquired by the intake amount acquisition unit, based on the state of the surrounding environment.

6. An abnormality detection method for detecting an abnormality of an exhaust gas recirculation valve mounted on a vehicle, the method comprising:
acquiring intake amount data indicating an intake amount while the exhaust gas recirculation valve is being in a certain state, the intake amount being measured at a plurality of different times;
storing a plurality of the acquired intake amount data in association with a time at which the intake amount is measured; and
detecting an abnormality of the exhaust gas recirculation valve based on a changing tendency of a plurality of the intake amounts measured during a certain period.

7. An abnormality detection system comprising an exhaust gas recirculation device mounted on a vehicle and an abnormality detection device that detects an abnormality of an exhaust gas recirculation valve based on an intake amount of the exhaust gas recirculation valve measured by the exhaust gas recirculation device, wherein
the exhaust gas recirculation device includes
a measurement unit, which measures an intake amount at a plurality of different times while the exhaust gas recirculation valve is being in a certain state, and
a communication unit, which transmits intake amount data indicating the intake amount to the abnormality detection device via a wireless communication line, and
the abnormality detection device includes
an intake amount acquisition unit, which acquires the intake amount data transmitted by the exhaust gas recirculation device,
a storage unit, which stores a plurality of the intake amount data acquired by the intake amount acquisition unit, in association with a time at which the intake amount is measured, and
an abnormality detection unit, which detects an abnormality of the exhaust gas recirculation valve based on a changing tendency of a plurality of the intake amounts measured during a certain period.
